(19) Europäisches Patentamt
European Patent Office
Office européen des brevets

(11) Veröffentlichungsnummer: **0 393 550 A2**

(12) # EUROPÄISCHE PATENTANMELDUNG

(21) Anmeldenummer: **90107153.0**

(22) Anmeldetag: **14.04.90**

(51) Int. Cl.[5]: **C08F 222/40, C08G 73/12, C08J 5/24, B29C 67/14**

(30) Priorität: **17.04.89 DE 3912532**

(43) Veröffentlichungstag der Anmeldung: **24.10.90 Patentblatt 90/43**

(84) Benannte Vertragsstaaten: **CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Eisenbarth, Philipp, Dr.**
**Gutleutstrasse 12**
**D-6702 Bad Duerkheim(DE)**
Erfinder: **Peter, Roland, Dr.**
**Pfalzring 92**
**D-6704 Mutterstadt(DE)**
Erfinder: **Folda, Thomas, Dr.**
**Adenauerstrasse 8**
**D-6719 Neuleiningen(DE)**

(54) **Hitzehärtbare Bismaleinimidharze.**

(57) Die Erfindung betrifft hitzehärtbare Harze, die ein Bismaleinimid, ein Alkenylphenol sowie N-Vinylpurrolidon enthalten. Die Harze sind zur Herstellung von Kohlenstoffaserprepregs geeignet, ferner zur Herstellung von Faserverbundwerkstoffen nach dem Wickelverfahren und Resin-Transfer-Molding-Verfahren.

EP 0 393 550 A2

Xerox Copy Centre

## Hitzehärtbare Bismaleinimidharze

Die Erfindung betrifft hitzehärtbare Bismaleinimidharze mit niedriger Viskosität, sowie daraus hergestellte Kohlenstoffaserprepregs mit verbesserter Klebrigkeit.

Bismaleinimidharze, die nach US-A 4 100 140 Alkenylphenole oder Alkenylphenolether als Comonomere enthalten, können zu Werkstoffen mit guten mechanischen und elektrischen Eigenschaften ausgehärtet werden. Die Herstellung von Prepregs durch Tränken von Verstärkungsfasern macht jedoch Schwierigkeiten, da die Harze bei Raumtemperatur eine verhältnismäßig hohe Viskosität aufweisen und bei Temperaturerhöhung der Härtungsprozeß einsetzt. Darüber hinaus weisen Kohlenstoffaserprepregs auf dieser Basis eine zu geringe Klebrigkeit (tack) auf, so daß die einzelnen Prepregs beim Aufeinanderschichten zur Werkstoffherstellung leicht verrutschen. Zudem schließen die hohen Schmelzviskositäten und die kurzen Topfzeiten die Verarbeitung nach der Wickeltechnik oder dem Resin-Transfer-Molding (RTM) aus.

Nach US-A 4,752,641 kann durch Zusatz von Allylestern, z.B. Triallylisocyanurat die Viskosität von Bismaleinimidharzen, die Alkenylphenole als Comonomere enthalten, verbessert werden. Dazu müssen aber verhältnismäßig große Mengen Triallylisocyanurat eingesetzt werden, was eine hohe Netzwerkdichte beim Aushärten und damit verbunden eine Verschlechterung der Zähigkeit zur Folge hat.

In der US-A 4 035 345 sind Bismaleinimidharze beschrieben, die Diamine als Comonomere sowie einen Zusatz einer Allyl- oder Vinylverbindung enthalten. Als geeignete Vinylverbindung ist u.a. auch N-Vinylpyrrolidon genannt. Derartige Harze sind jedoch zur Herstellung von Prepregs nicht geeignet, da diese überhaupt keine Klebrigkeit aufweisen. Ersetzt man bei dem in US-A 4 035 345 bevorzugten Harzsystem aus Bismaleinimid, Diamin und Allylphthalat das Diamin-Comonomere durch ein Alkenylphenol-Comonomer, so wird zwar die Klebrigkeit von Prepregs verbessert, die ausgehärteten Werkstoffe weisen jedoch eine niedrige Zähigkeit auf.

Der Erfindung lag daher die Aufgabe zugrunde, Bismaleinimidharze mit verringerter Viskosität zu entwickeln, aus denen Prepregs mit verbesserter Klebrigkeit hergestellt werden können, und die sich im Wickel- und RTM-Verfahren verarbeiten lassen. Ausgehärtete Werkstoffe aus diesen Harzen bzw. Prepregs sollen sich durch eine hohe Zähigkeit auszeichnen.

Gegenstand der Erfindung sind hitzehärtbare Harze, enthaltend

A. 100 Gew.-Teile eines Bismaleinimids,

B. 20 bis 100 Gew.-Teile eines Alkenylphenols, und

C. 1 bis 10 Gew.-Teile N-Vinylpyrrolidon.

Überraschenderweise wurde gefunden, daß ausgehärtete Bauteile aus derartigen Harzen eine verbesserte Zähigkeit aufweisen im Vergleich zu Harzen ohne N-Vinylpyrrolidon.

Als Komponente A sind Bismaleinimide der allgemeinen Formel

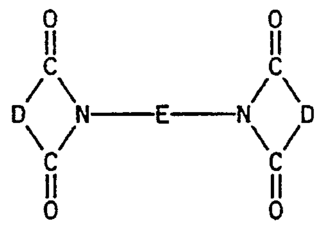

einsetzbar,
in der D eine gegebenenfalls substituierte Kohlenstoffdoppelbindung ist und E einen zweiwertigen Rest mit zumindest zwei Kohlenstoffatomen bedeutet. Bismaleinimide sind z.B. aus DE-A-2 040 094, DE-A-2 719 903 und DE-A-3 247 058 bekannt. Neben Bismaleinimiden sind grundsätzlich auch Polymaleinimide, sowie Mischungen veschiedener Bismaleinimide geeignet. Bevorzugte Bismaleinimide sind 4,4′-Bismaleinimidodiphenylmethan, 4,4′-Bismaleinimidodiphenylether, 3,3′-Bismaleinimidodiphenylsulfon, 1,3-Bismaleinimidobenzol, 2,4-Bismaleinimidotoluol, 1,6-Bismaleinimidohexan und 2,2,4-Trimethyl-1,6-bismaleinimidohexan. Es können auch bis zu 20 Gew.% eines Monoimids erhalten sein.

Alkenylphenole B sind ein- oder mehrkernige aromatische Verbindungen, die sowohl eine OH-Gruppe wie auch eine Alkenylgruppe am gleichen Benzolring besitzen. Bevorzugt sind zweikernige Allylphenole, z.B. o,o′-Diallylbisphenol A; ebenfalls geeignete Allylphenole basieren z.B. auf Bisphenol F oder entsprechenden Novolaken, Bisphenol S oder Hydrochinon. Zur Herstellung werden die entsprechenden Phenole nach bekannten Methoden z.B. mit Allylchlorid in Gegenwart einer Base zu den entsprechenden Allylphenylethern umgesetzt, die anschließend bei Temperaturen von etwa 200° C in einer Claisen-Umlagerung in die erfindungsgemäßen ortho-Allylphenole umgewandelt werden.

Der Anteil der Alkenylphenole B beträgt 20 bis 100 Teile, bezogen auf 100 Teile Bismaleinimid; bevorzugt sind 30 bis 60 Teile. Liegt der Anteil niedriger, so erhöht sich die Viskosität, und die Klebrigkeit entsprechender Prepregs ist zu gering, was zu Problemen beim Verarbeiten führt; bei Anteilen von mehr als 100 Teilen fällt die Glasübergangstemperatur zu stark ab.

N-Vinylpyrrolidon als Komponente C ist eine praktisch geruchlose, farblose und relativ ungiftige Flüssigkeit. Sie wird in Mengen von 1 bis 10, vorzugsweise von 2 bis 8 Gew.-Teilen, bezogen auf 100 Gew.-Teile des Bismaleinimids A eingesetzt.

Bei einem höheren Anteil wird zwar die Klebrigkeit noch weiter erhöht und die Viskosität der Harzschmelze abgesenkt, die Glastemperatur sinkt aber dann stark ab.

Die Mischungen können als weitere Zusätze Katalysatoren sowie Inhibitioren enthalten. Geeignete Katalysatoren sind tertiäre Amine oder Phosphine, Imidazole oder organische Säuren oder Peroxide. Als Inhibitoren sind Hydrochinon, Benzochinon oder Phenothiazin zu nennen. Die Menge an eingesetzten Initiatoren und Inhibitoren liegt etwa zwischen 0,05 bis 1,0 Gew.-Teilen, bezogen auf 100 Gew.-Teile A.

Ferner können übliche Füllstoffe und Verstärkungsmittel, wie z.B. Quarzpulver, Kaolin, Glimmer, Graphitpulver oder Metallpulver, sowie Glas- und Kohlenstoffasern zugesetzt werden, vorzugsweise in Mengen von bis zu 200 Gew.-Teilen, bezogen auf 100 Gew.-Teile der Komponente A.

Vorzugsweise enthalten die erfindungsgemäßen Harze keine Diamin-Härter.

Zur Herstellung der erfindungsgemäßen Bismaleinimidharze werden die Ausgangsmaterialien unter Anwendung der üblichen Techniken vermischt und auf Temperaturen zwischen 70 bis 190° C erhitzt, wobei die Bildung eines Präpolymeren erfolgt. Je nach Fortschritt der Vorpolymerisation erhält man eine relativ niedrig viskose Schmelze oder einen glasartig erstarrten Feststoff, der je nach Verwendungszweck gemahlen oder in einem Lösungsmittel gelöst wird. Die Herstellung der Harze kann auch in einem Lösungsmittel erfolgen.

Die erfindungsgemäßen Mischungen sind als Imprägnier-, Gieß- und Laminierharze oder als Formmassen (gefüllt oder ungefüllt) einsetzbar.

Eine bevorzugte Anwendung ist die Herstellung von Prepregs bzw. Hochleistungsverbundwerkstoffen, wobei die Tränkung von Glas-, Kohlenstoff- oder Aramidfasern unter Bildung von unidirektionalen oder Gewebeprepregs entweder aus der Schmelze bei 50 bis 120° C oder aus Lösung erfolgt. Geeignete Lösungsmittel sind halogenierte Kohlenwasserstoffe, wie z.B. Dichlormethan, Ketone wie z.B. Aceton oder Methylethylketon, Glykolester, Toluol, Dimethylformamid, N-Methylpyrrolidon bzw. Gemische aus diesen Lösungsmitteln.

Bevorzugt ist die Imprägnierung der Fasern aus der Schmelze bei Temperaturen zwischen 40 und 120° C, vorzugsweise zwischen 60 und 90° C. Die Verstärkungsfasern sind in der Vorzugsrichtung des späteren Verbundwerkstoffs orientiert; es kommen übliche Endlosfaserstränge (Rovings) aus Glas, aromatischen Polyamiden und bevorzugt Kohlenstoff in Frage, die als Einzel-Roving, als paralleles Fasergelege oder als Gewebe eingesetzt werden können.

Das Volumenverhältnis Kunststoffmatrix zu Verstärkungsfasern liegt bevorzugt zwischen 70:30 und 15:85, insbesondere zwischen 50:50 und 30:70.

Die erfindungsgemäß hergestellten Prepregs können nach üblichen Verfahren zur Herstellung von flächigen Bauteilen geschnitten, übereinandergelegt, verformt oder zur Herstellung rotationssymmetrischer Bauteile gewickelt werden. Sie werden dann zu Hochleistungsverbundwerkstoffen ausgehärtet, indem man sie auf Temperaturen zwischen 150 und 300° C, vorzugsweise zwischen 160 und 260° C, gegebenenfalls unter Druck, erhitzt. Die gewählte Härtungstemperatur hängt entscheidend von der Länge der Härtungszeit ab und umgekehrt. Vielfach ist eine stufenweise Härtung vorteilhaft, wobei bei einer niedrigeren Temperatur zunächst unter Formgebung eine Vernetzung der Polymeren herbeigeführt wird. Nach Entformen kann sich dann zur vollständigen Aushärtung eine unter Umständen mehrstündige Nachhärtung oberhalb 200° C anschließen.

Zur Verarbeitung im Wickelverfahren kann die Tränkung der Verstärkungsfasern mit der erfindungsgemäßen Harzmischung sowohl aus der Schmelze als auch aus Lösung erfolgen. Die Schmelzetränkung ist bevorzugt und wird bei Temperaturen zwischen 80 und 120° C in einem temperierbaren Tränkbad durchgeführt. Die imprägnierten Endlosfaserstränge werden ausgerichtet und auf einem rotierenden Wickelkern nach vorgegebener Geometrie abgelegt. Die Härtung erfolgt wieder stufenweise bei den angegebenen Temperaturen. Eine Nachhärtung nach dem Abziehen vom Kern oberhalb von 200° C erhöht die Glasübergangstemperatur.

Beim RTM-Verfahren wird zunächst ein dreidimensionaler Verformling, auch mit komplexer Struktur, aus Endlosfaser-Matten, -Gewebe oder Gestricke in eine Form eingelegt. Dann wird die Form geschlossen,

und die flüssige Harzmischung wird injiziert. Schließlich wird das Harz in der Form bei erhöhter Temperatur ausgehärtet und der Faserverbundwerkstoff aus der Form entnommen.

Die erhaltenen Hochleistungsverbundwerkstoffe weisen excellente mechanische und thermische Eigenschaften auf und können insbesondere als Formteile für die Automobil-, Luft- und Raumfahrtindustrie eingesetzt werden.

Beispiel 1

In einem Rührgefäß wurden 2100 g 4,4′-Bismaleinimidodiphenylmethan, 850 g o,o′-Diallylbisphenol A und 150 g N-Vinylpyrrolidon bei 150° C gemischt, bis sich eine homogene Schmelze gebildet hat.

Zur Bestimmung der mechanischen Eigenschaften des unverstärkten Formstoffs wurde ein Teil des Harzes zwischen Metallformen gegossen und 2 Stunden bei 150° C, 7 Stunden bei 180° C sowie 8 Stunden bei 240° C gehärtet. Daraus hergestellte Prüfkörper ergaben die in der Tabelle angegebenen Werte.

Zur Herstellung von unidirektionalen Prepregs mit der Kohlenstoffaser T 800 (Fa. Toray, Japan) wurde das Bismaleinimidharz bei 70° C zunächst auf ein kontinuierlich fortlaufendes Prepregpapier unter Bildung eines Films mit ca. 60 µm Dicke aufgebracht und anschließend das Faserband mit einem Flächengewicht von 135 g/m$^2$ bei 85° C unter Druck in den Harzfilm eingelegt und vollständig getränkt. Der Harzgehalt des auf diese Weise erhaltenen Prepregs betrug 35 %, entsprechend einer nominellen Prepregdicke von 0,125 mm, bezogen auf 60 Vol.% Fasergehalt. Das Prepreg wies eine gute Klebrigkeit auf.

Zur Herstellung eines unidirektional verstärkten Hochleistungsverbundwerkstoffs wurden durch übereinanderschichtung mehrerer Prepreglagen (entsprechend der Anforderung durch die Prüfkörpernorm) Laminate hergestellt und nach dem oben angegebenen Härtungscyclus gehärtet. Die Prüfergebnisse sind in der Tabelle dargestellt.

Die Klc- und Glc-Werte sowie Compression-after-impact-strength sind Maße für die Zähigkeit der Werkstoffe.

Vergleichsbeispiel

Es wurde analog Beispiel 1 gearbeitet, jedoch wurde das N-Vinylpyrrolidon weggelassen. Die Ergebnisse sind ebenfalls in der Tabelle aufgeführt.

Tabelle

| | Beispiel 1 | Vergleichsbeispiel |
|---|---|---|
| Ungehärtetes Harz: | | |
| Viskosität (75° C, mPas) | 2200 | > 4000 |
| Gehärtetes Reinharz: | | |
| Klc-Wert (MPa•m1/2) | 0,91 | 0,71 |
| Glc-Wert (J/m2) [jeweils nach ASTM E 399] | 150 | 105 |
| Laminat: | | |
| Glc-Wert (J/m2) [nach NASA-Prüfnorm RP 1092] | 375 | 263 |
| Restdruckfestigkeit bzw. Compression-after-impact-strength (MPa) [nach ASTM D 695] | 150 | 129 |

## Ansprüche

1. Hitzehärtbares Bismaleinimidharz, enthaltend

A) 100 Gew.-Teile eines Bismaleinimids
B) 20 bis 100 Gew.-Teile eines Alkenylphenols
C) 1 bis 10 Gew.-Teile N-Vinylpyrrolidon.

2. Bismaleinimidharz nach Anspruch 1, dadurch gekennzeichnet, daß als Alkenylphenol ein Diallylphenol, vorzugsweise o,o′-Diallylbisphenol A eingesetzt wird.

3. Verwendung des Bismaleinimidharzes nach Anspruch 1 zur Herstellung von Kohlenstoffaserprepregs.

4. Verwendung des Bismaleinimidharzes nach Anspruch 1 zur Herstellung von glas- oder kohlenstoffaserverstärkten Rohren, Behältern und Wellen nach dem Wickelverfahren.

5. Verwendung des Bismaleinimidharzes nach Anspruch 1 zur Herstellung von glas- oder kohlenstoffaserverstärkten Formteilen mit komplexer dreidimensionaler Struktur nach dem Resin-Transfer-Molding (RTM)-Verfahren.